# EUROPÄISCHE PATENTANMELDUNG

(11) **EP 4 019 337 A1**
(43) Veröffentlichungstag der Anmeldung: **29.06.2022**
(21) Anmeldenummer: 21214459.6
(22) Anmeldetag: 14.12.2021
(51) Int. Cl.: B60R 13/02

(54) **AUSSENVERKLEIDUNGSTEIL FÜR DEN FRONTBEREICHT EINES KRAFTFAHRZEUGS UND VERFAHREN ZUR HERSTELLUNG EINES AUSSENVERKLEIDUNGSTEILS**

(30) Priorität: 28.12.2020 DE 102020134941
(71) Anmelder: REHAU Automotive SE & Co. KG, 95111 Rehau (DE)
(72) Erfinder: Fastner, Julian, 95030 Hof (DE); Reichstein, Johann, 95448 Bayreuth (DE)

(57) **Zusammenfassung**

Die Erfindung betrifft ein Außenverkleidungsteil für den Frontbereich eines Kraftfahrzeugs umfassend einen Grundkörper (1) aus einem Polymermaterial (2), wobei der Grundkörper (1) eine bei bestimmungsgemäßer Verwendung am Kraftfahrzeug sichtbare Außenseite (A) und eine der Außenseite gegenüberliegende Innenseite (I) aufweist, wobei das Polymermaterial (2) dem Grundkörper (1) eine Basis-Schlagzähigkeit verleiht, wobei auf der Außenseite (A) und/oder der Innenseite (I) eine Schutzbeschichtung (3a, 3b) oder jeweils eine Schutzbeschichtung (3a, 3b) stoffschlüssig mit dem Grundkörper (1) verbunden ist und der Grundkörper (1) und die Schutzbeschichtung (3a, 3b) oder die jeweilige Schutzbeschichtung (3a, 3b) einen Verbund (4) bilden, wobei die Schutzbeschichtung (3a, 3b) oder die jeweilige Schutzbeschichtung (3a, 3b) Polyurethan oder Polyurea umfasst, sodass der Verbund (4) eine größere Schlagzähigkeit als die Basis-Schlagzähigkeit des Grundkörpers (1) erreicht.

## Beschreibung

Die vorliegende Erfindung betrifft ein Außenverkleidungsteil für ein Kraftfahrzeug umfassend einen Grundkörper aus einem Polymermaterial, wobei der Grundkörper eine bei bestimmungsgemäßer Verwendung am Kraftfahrzeug sichtbare Außenseite und eine der Außenseite gegenüberliegende Innenseite aufweist, wobei das Polymermaterial dem Grundkörper eine Basis-Schlagzähigkeit verleiht.

Ein entsprechendes Außenverkleidungsteil für ein Kraftfahrzeug kann der DE 10 2017 129 555 A1 entnommen werden.

Für Außenverkleidungsteile im Frontbereich von Kraftfahrzeugen sind bislang spröde splitternde Werkstoffe mit einer geringen Schlagzähigkeit, wie beispielsweise Polymethylmethacrylat nicht im Einsatz, da diese nicht die Kriterien für eine ausreichende Sicherheit von Fußgängern im Falle eines Unfalles erfüllen. Derartige Außenverkleidungsteile sind daher aus Polymermaterialien gestaltet die eine deutlich höhere Schlagzähigkeit aufweisen, wie beispielsweise Polycarbonat. Diese aktuell eingesetzten Werkstoffe sind hinsichtlich ihrer Eigenschaften in Hinsicht auf Kratzbeständigkeit, Erscheinungsbild und Chemikalienbeständigkeit jedoch nur in Kombination mit teuren Schutzlackierungen einsetzbar.

Die Erfindung stellt sich daher die Aufgabe ein Außenverkleidungsteil mit den eingangs beschriebenen Merkmalen anzugeben, das gegenüber dem Stand der Technik aus weniger schlagzähen Polymermaterialien herstellbar ist.

Erfindungsgemäß wird diese Aufgabe gelöst durch ein Außenverkleidungsteil für ein Kraftfahrzeug umfassend:
- einen Grundkörper aus einem Polymermaterial, wobei der Grundkörper eine bei bestimmungsgemäßer Verwendung am Kraftfahrzeug sichtbare Außenseite und eine der Außenseite gegenüberliegende Innenseite aufweist,
wobei das Polymermaterial dem Grundkörper eine Basis-Schlagzähigkeit verleiht,
wobei auf der Außenseite und/oder der Innenseite eine Schutzbeschichtung oder jeweils eine Schutzbeschichtung stoffschlüssig mit dem Grundkörper verbunden ist und der Grundkörper und die Schutzbeschichtung oder die jeweilige Schutzbeschichtung einen Verbund bilden,
wobei die Schutzbeschichtung oder die jeweilige Schutzbeschichtung Polyurethan oder Polyurea umfasst, sodass der Verbund eine größere Schlagzähigkeit als die Basis-Schlagzähigkeit des Grundkörpers erreicht.

Die Erfindung beruht auf der Erkenntnis, dass durch eine Schutzbeschichtung (entweder jeweils auf der Außen- und Innenseite, oder nur auf der Außen- oder der Innenseite), die Polyurea oder Polyurethan umfasst, der spröde Polymerwerkstoffe des Grundkörpers im Verbund mit der Schutzbeschichtung bei schlagartiger mechanischen Beanspruchung in seiner Gesamtheit kein sprödes Bruchverhalten mehr aufweist. Es können daher spröde brechende Polymerwerkstoffe für Außenverkleidungsteile für den Frontbereich von Kraftfahrzeugen eingesetzt werden, ohne dass die Sicherheit im Crashfall darunter leidet. Die Erfindung erlaubt es teure oder aufgrund ihres sonstigen Eigenschaftsprofiles ungeeignete schlagzähe Werkstoffe zu substituieren. Polyurea wird auch Polyharnstoff genannt.

Das Polymermaterial des Grundkörpers kann insbesondere Polymethylmethacrylat oder Polyamid oder Styrol-Methylmethacrylat oder Polyethylenterephthalat, oder Mischungen der vorgenannten Materialien umfassen.

Das Polymermaterial ist hierbei bevorzugt ein transluzentes oder transparentes Polymermaterial, welches für Spektralbereiche des sichtbaren Lichts mit einer geringen Absorption durchstrahlbar ist.

Die Schutzbeschichtung oder die jeweilige Schutzbeschichtung weist bevorzugt eine Dicke im Bereich von 0,1 mm bis 4,0 mm, bevorzugt von 0,2 mm bis 2,5 mm, weiter bevorzugt von 0,4 mm bis 1,8 mm auf. Die vorgenannten Dickenbereiche haben sich in Versuchen als besonders geeignet erwiesen die Schlagzähigkeit des Verbundes zu erhöhen.

Das Außenverkleidungsteil für den Frontbereich eines Kraftfahrzeuges kann insbesondere ein Kühlergrill, eine Stoßfängerverkleidung, eine Frontblende, ein Scheinwerfergehäuse, eine Zierblende, eine Streuscheiben, eine Radarabdeckung, eine Sensorabdeckung, ein Verschlussdeckel, ein Spritzdüsendeckel oder ein Bauteil oder eine Baugruppe oder ein Bestandteil der vorgenannten Teile sein.

Der Grundkörper weist bevorzugt eine Wandstärke im Bereich von 0,8 mm bis 4,5 mm auf.

Ein Verfahren zur Herstellung eines Außenverkleidungsteils für den Frontbereich eines Kraftfahrzeuges, insbesondere eines Außenverkleidungsteils wie vorstehend beschrieben oder nach einem der Ansprüche 1 bis 5, umfasst die folgenden Schritte:
- Bereitstellen eines Grundkörpers aus einem Polymermaterial, wobei der Grundkörper eine bei bestimmungsgemäßer Verwendung am Kraftfahrzeug sichtbare Außenseite und eine der Außenseite gegenüberliegende Innenseite aufweist, wobei das Polymermaterial dem Grundkörper eine Basis-Schlagzähigkeit verleiht,
- Aufbringen wenigstens einer Schutzbeschichtung auf der Außenseite und/oder der Innenseite des Grundkörpers, sodass die Schutzbeschichtung oder die jeweilige Schutzbeschichtung stoffschlüssig mit dem Grundkörper verbunden ist und der Grundkörper und die Schutzbeschichtung oder die jeweilige Schutzbeschichtung einen Verbund bilden,
wobei die Schutzbeschichtung oder die jeweilige Schutzbeschichtung Polyurethan oder Polyurea umfasst, sodass der Verbund eine größere Schlagzähigkeit als die Basis-Schlagzähigkeit des Grundkörpers erreicht.

Der Schritt des Bereitstellens des Grundkörpers kann ein Spritzgussverfahren oder ein Thermoformungsverfahren umfassen.

Das Bereitstellen des Grundkörpers und das Aufbringen der Schutzbeschichtung oder der jeweiligen Schutzbeschichtung kann insbesondere in einem Mehrkomponenten-Spritzgusswerkzeug erfolgen.

Das Aufbringen der Schutzbeschichtung oder der jeweiligen Schutzbeschichtung kann durch ein Aufsprühen oder ein Aufgießen des Materials der Schutzbeschichtung auf den Grundkörper oder kann durch ein Überfluten des Grundkörpers mit dem Material der Schutzbeschichtung oder kann durch ein Tauchen des Grundkörpers in dem Material der Schutzbeschichtung erfolgen.

Vor dem Aufbringen der Schutzbeschichtung oder der jeweiligen Schutzbeschichtung kann die Außenseite und/oder die Innenseite einer Oberflächenbehandlung unterzogen werden, insbesondere mittels Ultraviolettstrahlung, oder Laserstrahlung, oder Plasmastrahlung oder mittels einer Beflammung. Die Oberflächenbehandlung dient insbesondere der Aktivierung der jeweiligen Oberfläche der Innenseite und/oder der Außenseite mit dem Ziel die Haftfestigkeit der Schutzbeschichtung auf dem Grundkörper weiter zu verbessern.

Im Folgenden wird die Erfindung anhand lediglich Ausführungsbeispiele darstellender Zeichnungen erläutert. Es zeigen schematisch:
- Fig. 1: eine schematische Darstellung des Aufbaus des Außenverkleidungsteils in einem Querschnitt;
- Fig. 2: eine schematische Darstellung des Aufbaus einer Variante des Außenverkleidungsteils in einem Querschnitt;
- Fig. 3: eine Teilansicht eines Außenverkleidungsteils.

In den Figuren werden gleiche oder funktionsgleiche Elemente mit den gleichen Bezugszeichen versehen.

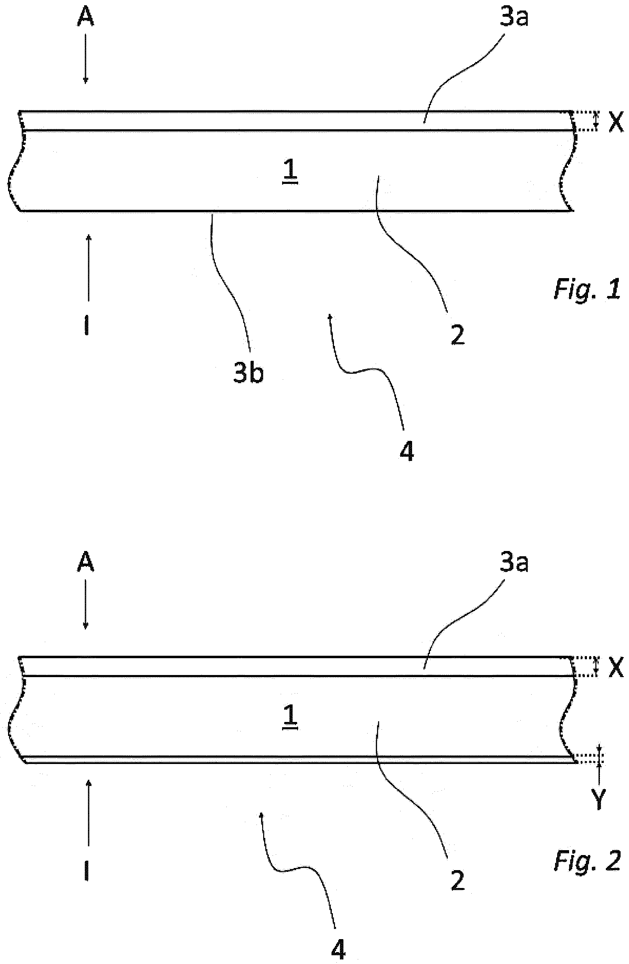

Die Fig. 1 zeigt eine Querschnittsdarstellung eines Außenverkleidungsteils für den Frontbereich eines Kraftfahrzeugs umfassend:
- einen Grundkörper 1 aus einem Polymermaterial 2, wobei der Grundkörper 1 eine bei bestimmungsgemäßer Verwendung am Kraftfahrzeug sichtbare Außenseite A und eine der Außenseite gegenüberliegende Innenseite I aufweist,
wobei das Polymermaterial 2 dem Grundkörper 1 eine Basis-Schlagzähigkeit verleiht.

Auf der Außenseite A ist eine Schutzbeschichtung 3a stoffschlüssig mit dem Grundkörper 1 verbunden. Der Grundkörper 1 und die Schutzbeschichtung 3a bilden einen Verbund 4, wobei die Schutzbeschichtung 3a Polyurethan oder Polyurea umfasst, sodass der Verbund 4 eine größere Schlagzähigkeit als die Basis-Schlagzähigkeit des Grundkörpers 1 erreicht.

Die Fig. 2 zeigt als Variante eine Querschnittsdarstellung eines Außenverkleidungsteils für den Frontbereich eines Kraftfahrzeugs umfassend:
- einen Grundkörper 1 aus einem Polymermaterial 2, wobei der Grundkörper 1 eine bei bestimmungsgemäßer Verwendung am Kraftfahrzeug V sichtbare Außenseite A und eine der Außenseite gegenüberliegende Innenseite I aufweist,
wobei das Polymermaterial 2 dem Grundkörper 1 eine Basis-Schlagzähigkeit verleiht.

Auf der Außenseite A und der Innenseite I ist jeweils eine Schutzbeschichtung 3a, 3b stoffschlüssig mit dem Grundkörper 1 verbunden. Der Grundkörper 1 und die jeweilige Schutzbeschichtung 3a, 3b bilden einen Verbund 4, wobei die jeweilige Schutzbeschichtung 3a, 3b Polyurethan oder Polyurea umfasst, sodass der Verbund 4 eine größere Schlagzähigkeit als die Basis-Schlagzähigkeit des Grundkörpers 1 erreicht.

Für beide Ausführungsbeispiele gilt:
Der Grundkörper 1 weist bevorzugt eine Wandstärke im Bereich von 0,8 mm bis 4,5 mm auf.

Das Polymermaterial 2 des Grundkörpers 1 umfasst Polymethylmethacrylat oder Polyamid oder Styrol-Methylmethacrylat oder Polyethylenterephthalat, oder Mischungen der genannten Materialien.

Das Polymermaterial 2 ist ein transluzentes oder transparentes Polymermaterial ist, welches für Spektralbereiche des sichtbaren Lichts mit einer geringen Absorption durchstrahlbar ist.

Die Schutzbeschichtung 3a oder die jeweilige Schutzbeschichtung 3a, 3b weisen eine Dicke X, Y im Bereich von 0,1 mm bis 4,0 mm, bevorzugt von 0,2 mm bis 2,5 mm, weiter bevorzugt von 0,4 mm bis 1,8 mm auf.

Das Außenverkleidungsteil kann ein Kühlergrill, eine Stoßfängerverkleidung, eine Frontblende, ein Scheinwerfergehäuse, eine Zierblende, eine Streuscheiben, eine Radarabdeckung, eine Sensorabdeckung, ein Verschlussdeckel, ein Spritzdüsendeckel oder ein Bauteil oder eine Baugruppe oder ein Bestandteil der vorgenannten Teile sein.

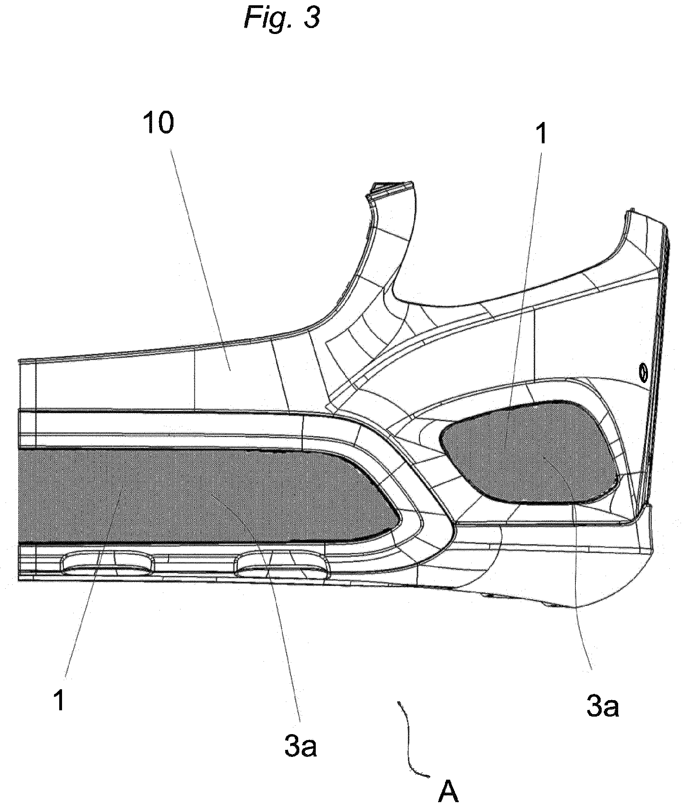

In fig. 3 ist als Beispiel gezeigt, dass das Außenverkleidungsteil mit seinem Grundkörper 1 ein Bestandteil einer Stoßfängerverkleidung 10 ist.

Ein Verfahren zur Herstellung eines Außenverkleidungsteils für den Frontbereich eines Kraftfahrzeuges gemäß den vorstehenden Ausführungsbeispielen, oder gemäß einem der Ansprüche 1 bis 5 kann wie folgt charakterisiert sein.

Verfahren zur Herstellung eines Außenverkleidungsteils für den Frontbereich eines Kraftfahrzeuges, umfassend die folgenden Schritte:
- Bereitstellen eines Grundkörpers 1 aus einem Polymermaterial 2, wobei der Grundkörper 1 eine bei bestimmungsgemäßer Verwendung am Kraftfahrzeug V sichtbare Außenseite A und eine der Außenseite gegenüberliegende Innenseite I aufweist, wobei das Polymermaterial 2 dem Grundkörper 1 eine Basis-Schlagzähigkeit verleiht,
- Aufbringen wenigstens einer Schutzbeschichtung 3a, 3b auf der Außenseite A und/oder der Innenseite I des Grundkörpers 1, sodass die Schutzbeschichtung 3a, 3b oder die jeweilige Schutzbeschichtung 3a, 3b stoffschlüssig mit dem Grundkörper 1 verbunden ist und der Grundkörper 1 und die Schutzbeschichtung 3a, 3b oder die jeweilige Schutzbeschichtung 3a, 3b einen Verbund 4 bilden,
wobei die Schutzbeschichtung 3a, 3b oder die jeweilige Schutzbeschichtung 3a, 3b Polyurethan oder Polyurea umfasst, sodass der Verbund 4 eine größere Schlagzähigkeit als die Basis-Schlagzähigkeit des Grundkörpers 1 erreicht.

Der Schritt des Bereitstellens des Grundkörpers 1 kann ein Spritzgussverfahren oder ein Thermoformungsverfahren umfassen.

Das Bereitstellen des Grundkörpers 1 und das Aufbringen der Schutzbeschichtung 3a, 3b oder der jeweiligen Schutzbeschichtung 3a, 3b kann in einem Mehrkomponenten-Spritzgusswerkzeug erfolgen.

Das Aufbringen der Schutzbeschichtung 3a, 3b oder der jeweiligen Schutzbeschichtung 3a, 3b kann durch ein Aufsprühen oder ein Aufgießen des Materials der Schutzbeschichtung 3a, 3b auf den Grundkörper 1 oder durch ein Überfluten des Grundkörpers 1 mit dem Material der Schutzbeschichtung 3a, 3b oder durch ein Tauchen des Grundkörpers 1 in dem Material der Schutzbeschichtung 3a, 3b erfolgen.

Vor dem Aufbringen der Schutzbeschichtung 3a, 3b oder der jeweiligen Schutzbeschichtung 3a, 3b kann die Außenseite A und/oder die Innenseite I einer Oberflächenbehandlung unterzogen werden, insbesondere mittels Ultraviolettstrahlung, oder Laserstrahlung, oder Plasmastrahlung oder mittels einer Beflammung.

## Patentansprüche

1. Außenverkleidungsteil für den Frontbereich eines Kraftfahrzeugs (V) umfassend:
- einen Grundkörper (1) aus einem Polymermaterial (2), wobei der Grundkörper (1) eine bei bestimmungsgemäßer Verwendung am Kraftfahrzeug (V) sichtbare Außenseite (A) und eine der Außenseite gegenüberliegende Innenseite (I) aufweist,
wobei das Polymermaterial (2) dem Grundkörper (1) eine Basis-Schlagzähigkeit verleiht,
**dadurch gekennzeichnet, dass**
auf der Außenseite (A) und/oder der Innenseite (I) eine Schutzbeschichtung (3a, 3b) oder jeweils eine Schutzbeschichtung (3a, 3b) stoffschlüssig mit dem Grundkörper (1) verbunden ist und der Grundkörper (1) und die Schutzbeschichtung (3a, 3b) oder die jeweilige Schutzbeschichtung (3a, 3b) einen Verbund (4) bilden,
wobei die Schutzbeschichtung (3a, 3b) oder die jeweilige Schutzbeschichtung (3a, 3b) Polyurethan oder Polyurea umfasst,
sodass der Verbund (4) eine größere Schlagzähigkeit als die Basis-Schlagzähigkeit des Grundkörpers (1) erreicht.

2. Außenverkleidungsteil nach Anspruch 1, **dadurch gekennzeichnet, dass** Polymermaterial (2) Polymethylmethacrylat oder Polyamid oder Styrol-Methylmethacrylat oder Polyethylenterephthalat, oder Mischungen der vorgenannten Materialien umfasst.

3. Außenverkleidungsteil nach einem der vorstehenden Ansprüche 1 oder 2, **dadurch gekennzeichnet, dass** das Polymermaterial (2) ein transluzentes oder transparentes Polymermaterial ist, welches für Spektralbereiche des sichtbaren Lichts mit einer geringen Absorption durchstrahlbar ist.

4. Außenverkleidungsteil nach einem der vorstehenden Ansprüche, **dadurch gekennzeichnet, dass** die Schutzbeschichtung (3a, 3b) oder die jeweilige Schutzbeschichtung (3a, 3b) eine Dicke (X, Y) im Bereich von 0,1 mm bis 4,0 mm, bevorzugt von 0,2 mm bis 2,5 mm, weiter bevorzugt von 0,4 mm bis 1,8 mm aufweist.

5. Außenverkleidungsteil nach einem der vorstehenden Ansprüche, **dadurch gekennzeichnet, dass** das Außenverkleidungsteil ein Kühlergrill, eine Stoßfängerverkleidung, eine Frontblende, ein Scheinwerfergehäuse, eine Zierblende, eine Streuscheiben, eine Radarabdeckung, eine Sensorabdeckung, ein Verschlussdeckel, ein Spritzdüsendeckel oder ein Bauteil oder eine Baugruppe oder ein Bestandteil der vorgenannten Teile ist.

6. Verfahren zur Herstellung eines Außenverkleidungsteils für den Frontbereich eines Kraftfahrzeuges, insbesondere eines Außenverkleidungsteils nach einem der vorstehenden Ansprüche 1 bis 5, umfassend die folgenden Schritte:
- Bereitstellen eines Grundkörpers (1) aus einem Polymermaterial (2), wobei der Grundkörper (1) eine bei bestimmungsgemäßer Verwendung am Kraftfahrzeug (V) sichtbare Außenseite (A) und eine der Außenseite gegenüberliegende Innenseite (I) aufweist, wobei das Polymermaterial (2) dem Grundkörper (1) eine Basis-Schlagzähigkeit verleiht,
- Aufbringen wenigstens einer Schutzbeschichtung (3a, 3b) auf der Außenseite (A) und/oder der Innenseite (I) des Grundkörpers (1), sodass die Schutzbeschichtung (3a, 3b) oder die jeweilige Schutzbeschichtung (3a, 3b) stoffschlüssig mit dem Grundkörper (1) verbunden ist und der Grundkörper (1) und die Schutzbeschichtung (3a, 3b) oder die jeweilige Schutzbeschichtung (3a, 3b) einen Verbund (4) bilden,
wobei die Schutzbeschichtung (3a, 3b) oder die jeweilige Schutzbeschichtung (3a, 3b) Polyurethan oder Polyurea umfasst,
sodass der Verbund (4) eine größere Schlagzähigkeit als die Basis-Schlagzähigkeit des Grundkörpers (1) erreicht.

7. Verfahren zur Herstellung eines durchleuchtbaren Verkleidungsteils nach Anspruch 6, **dadurch gekennzeichnet, dass** der Schritt des Bereitstellens des Grundkörpers (1) ein Spritzgussverfahren oder ein Thermoformungsverfahren umfasst.

8. Verfahren zur Herstellung eines Außenverkleidungsteils nach Anspruch 6 oder 7, **dadurch gekennzeichnet, dass** das Bereitstellen des Grundkörpers (1) und das Aufbringen der Schutzbeschichtung (3a, 3b) in einem Mehrkomponenten-Spritzgusswerkzeug erfolgt.

9. Verfahren zur Herstellung eines Außenverkleidungsteils nach einem der vorstehenden Ansprüche 6 bis 8, **dadurch gekennzeichnet, dass** das Aufbringen der Schutzbeschichtung (3a, 3b) durch ein Aufsprühen oder ein Aufgießen des Materials der Schutzbeschichtung (3a, 3b) auf den Grundkörper (1) oder durch ein Überfluten des Grundkörpers (1) mit dem Material der Schutzbeschichtung (3a, 3b) oder durch ein Tauchen des Grundkörpers (1) in dem Material der Schutzbeschichtung (3a, 3b) erfolgt.

10. Verfahren zur Herstellung eines Außenverkleidungsteils nach einem der vorstehenden Ansprüche 6 bis 9, **dadurch gekennzeichnet, dass** vor dem Aufbringen der Schutzbeschichtung (3a, 3b) die Außenseite und/oder die Innenseite (I) einer Oberflächenbehandlung unterzogen wird, insbesondere mittels Ultraviolettstrahlung, oder Laserstrahlung, oder Plasmastrahlung oder mittels einer Beflammung.
